# EUROPEAN PATENT SPECIFICATION

(11) **EP 0 308 420 B1**
(45) Date of publication and mention of the grant of the patent: **01.09.1993**
(21) Application number: 87903878.4
(22) Date of filing: 01.06.1987
(51) Int. Cl.: G01N 27/62

(54) **METHOD FOR DETECTION OF ALIEN MATTER CONTENTS IN GASES**
VERFAHREN ZUM NACHWEIS VON FREMDSTOFFGEHALTEN IN GASEN
PROCEDE DE DETECTION DE SUBSTANCES ETRANGERES CONTENUES DANS DES GAZ

(30) Priority: 03.06.1986 FI 862349
(43) Date of publication of application: 29.03.1989
(73) Proprietor: PUUMALAINEN, Pertti, 70300 Kuopio (FI)
(72) Inventor: PUUMALAINEN, Pertti, 70300 Kuopio (FI)
(74) Representative: Bühling, Gerhard, Dipl.-Chem.
(86) International application number: PCT/FI87/00075
(87) International publication number: WO 87/07720

(56) References cited:
- EP-A- 4 124
- EP-A- 21 518
- CH-A- 550 399
- DE-A- 2 028 805
- DE-C- 2 827 120

## Description

The invention relates to a method for detection of foreign matter contents in gases, in which method the gas and the materials contained in it are ionized in an ionizing room.

For many different purposes it is endeavoured to detect and to measure the contents of foreign matters contained in gases. In particular when analyzing from the gas some relatively small quantities containing components, the impurities of the gas may disturb the detection. The detection of different molecules or molecule groups performed from gases in general, from gases attenuated by vacuum pumps or from vapour originating from evaporated solid materials or liquid matters are nowadays connected with problems. In particular the poisonous materials existing in the air, such as from the industry by accident into the air emanated poisonous matters or into the breathing air diffused nerve and other kinds of combat gases, are difficult to detect in a quick and dependable way.

At the moment mostly is used by taking advantage of the analyzing methods the EC-detector of gas chromatographs, in which method the radioactive radiation is allowed to ionize the carrier gas and the molecules of the foreign matters contained in it, the ionized molecules of the carrier gas are permitted partly by means of delaying to recombine themselves, whereafter the iones of the gas are measured. In such a manner for instance is obtained the signal to be measured of the organic substances evaporated into the carrier gas. Measuring devices based on this same principle have also been designed for analyzing of nerve gases from the air. These devices are of two categories: in the first application the ionized molecules are led into a labyrinth, where the own molecules of the air are allowed to recombine themselves and the current of iones caused by the organic molecules is measured after this. In the other application the entering of the light air molecules into the ione measuring space is impeded by means of voltage grids. This in use being method and the devices for application of it are not sensitive enough when measuring low concentrations such as nerve gases or corresponding from the air or they give a signal also for the other materials or impurities contained by the gas, such as tobacco smoke, exhaust gases, explosion gases, protection smokes etc. substances. Additionally, the cause of the signal can also be for instance a sudden increase in the moisture contents of the air, so the measuring outcome is inaccurate and uncertain.

Document CH-A-550 399 discloses an air pollution measuring equipement comprising a first and a second air capacitor each having a suitable length through which ionized air containing pollution flows laminarily at a constant velocity. The capacitors may have planar or cylindrical electrodes and may comprise two or more electrodes. In order to provide different electric fields for generating a first and second varying measurement signal as a function of a small and large positive ion concentration in the air stream generated by means of an exhaust fan, the electrodes of the capacitors are supplied with different voltages. The output signals measured via the electrodes of the capacitors are applied to the inputs of dividing and summing circuit means, the output of which provide a final output signal which constitutes a measure of air pollution.

Furthermore, document DE-A-2 028 805 discloses a method for detecting trace vapors which undergo ion-molecule reactions and for separating, concentrating and measuring of molecular quantities of trace substances in gaseous samples. In an electric field essentially parallel to the gas stream between two electrodes arranged in a detecting chamber, the detection and measurement is accomplished by utilizing the difference in velocity or drift time of ions of different mass in the electric field applied to the gas stream. The electric drift field causes the primary ions to migrate towards a plurality of ion gates provided rectangular to the gas stream and in parallel between the electrodes, during which the primary ions react with molecules of a gas to be detected, converting the molecules to secondary or product ions, thereby measuring and classifying the ions according to their particular mass.

From document EP-A-0 021 518 a similar method is known for detecting trace quantities of chemical species defined in a gaseous mixture by ionizing a proportion of the molecules and leading the gas through an electric field which is arranged in the above mentioned manner in a detecting chamber.

Therefore, it is the object of the invention to provide an improved method of detecting even a small amount of foreign matter in gases, in particular dangerous matters, such as for instance nerve gases and other kinds of combat gases, and determining the quality of a detected substance amidst the possibly disturbing other quantities of materials and impurities in a dependable and quick way.

According to the invention, a method for detection of foreign matter contents in gases is provided, in which ionized gases and materials contained in it are led through a plurality of chambers each with different electric fields transverse to the gas stream, electric currents passing transversely through two or more of the plurality of said chambers due to ions reaching measuring electrodes are measured, corresponding signals are obtained, and on the basis of the amount and relationship of said signals corresponding to the measured electric currents, an analysis of the foreign matter in the gases is provided, said method being characterized in that an ionization zone is arranged at the intake end of the plurality of chambers, the gases and the materials contained in it are ionized in the ionization zone and led through the plurality of said chambers arranged sequentially, and the electric fields of the plurality of chambers are arranged in alternating field directions.

Alternatively, a method for detection of foreign matter contents in gases is provided, in which ionized gases and materials contained in it are led through a plurality of chambers each with different electric fields transverse to the gas stream, electric currents passing transversely through two or more of the plurality of said chambers due to ions reaching measuring electrodes are measured, corresponding signals are obtained, and on the basis of the amount and relationship of said signals corresponding to the measured electric currents, an analysis of the foreign matter in the gases is provided, said method being characterized in that the gases and the materials contained in it are ionized in an ionization zone, and the ionized gas containing foreign matter is passed along a tortuous path within each of said chambers, said tortuous path being defined by current measuring plates carried by blocks alternately affixed to opposite chamber walls so that the chamber wall opposite to that to which each measuring plate is affixed is free with a gap between adjacent measuring plates, thereby defining at least two electric field sub-chambers within said chambers, wherein the intensity of the electric field in each of said sub-chambers is different from one another.

Thus, according to the present invention, gases and the materials contained in it are first ionized in an ionization zone and then led through a plurality of sequentially arranged separate chambers each having a different electric field transverse to the gas stream and with alternating field directions, or alternatively led through a tortuous path formed in each of the chambers thereby defining at least two electric field sub-chambers within the chambers, wherein the intensity of the electric field in each of the sub-chamber is different from one another. These electric fields are provided by supplying different electric voltages to special voltage plates mounted in each chamber, thereby forming electric fields with various magnitudes rectangular or transverse to the gas stream, respectively. Thus, the electric field currents pass transversely through these chambers, that is, the field current passes through a chamber from side to side. The value of the electric field current of each chamber flowing transverse to the gas stream due to certain ions being guided to certain measuring electrodes or voltage plates, respectively, is measured via meters connected to these voltage plates. An analysis of materials to be examined is carried out indirectly on the basis of the flow signals according to the measured electric field current. Different molecule groups can be determined and separated from each other with the help of typical flow signals, obtained by measuring the electric field current due to known molecules or molecule groups, thus providing standard values of known matter. The value of the measured field current of an unknown matter in comparison with the standard values of known matters indicates the contents of a particular matter in the gas to be examined.

The method is functioning under atmospheric pressure or in an under pressure, for instance in air thinned by a vacuum pump. The method can also be used in many different chemical analyzing methods, such as in a detector of gas chromatographs or in a detector of liquid chromatographs, when the materials first are heated or brought into a gaseous state by lowering the pressure. In such a way more resolution capacity is brought into the analyses. With the help of the method in accordance with the invention it is also possible to measure concentrations from a wished group of materials and additionally divide the group into subdivisions, for instance in order to determine the quality of nerve gas.

In a favourable application of the method from two or more chambers with different electric fields the passed-through flows are measured and the analysis of the materials to be examined is made on the basis of the quantities and relations of the flow signals. Hereat different molecule groups can be separated from each other with the help of typical flow signals from different spots.

In the following the invention is explained more in detail by referring to the attached drawing, in which
figure 1 presents an embodiment of the device system for realization of the method in accordance with the invention in cross-section and seen from the side, and
figure 2 presents another embodiment of the device system for the applying of the method in accordance with the invention in cross-section and seen from the side.

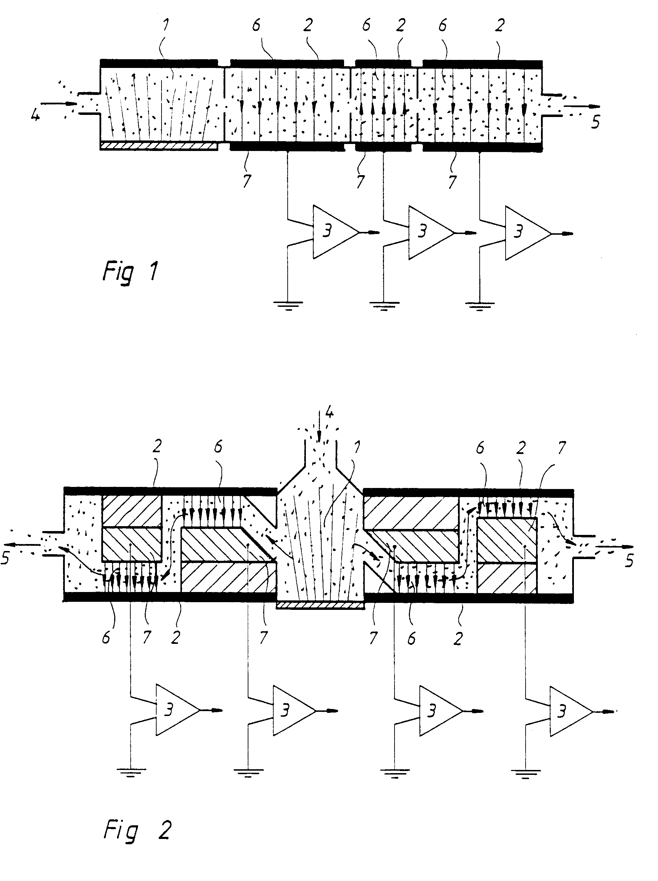

In figure 1 the principle of the method in accordance with the invention is presented. To the device system belong a ionization zone 1, chambers 2 and meters 3. In the chambers 2, by means of voltage plates, traverse electric fields 6 of different magnitude are formed. In the ionization zone 1 a suitable radio isotope is used, with the help of the radiation of which the ionization of the gas is taking place. The gas to be examined is brought in this application in by suction through an intake opening 4 to the ionization zone 1 and from there the ionized gas is led through the chambers 2 placed after each other through an outfeed opening 5 out of the device system. The flow is obtained in this application by means of an air pump, by which the gas and its components are sucked through the analyzing device system. In the ionization zone 1 the ionized molecules and the fragmented molecules are transported through the chambers 2 and through the different electric fields 6 existing in the chambers 2. Hereby the molecules endeavour to recombine themselves or to destroy their charges and in the different electric fields 6 also iones are removed from the system. In the figure the voltages form together with the earth coupled lower plates field lines into the passage space, and when the meters or intensifiers 3 are coupled to the ground current, it is possible to start treating the signal. By setting two or more flowing measurings in the same flowing channel, by using electric fields of different magnitude, different molecule groups can be separated from each other with the help of typical flow signals from different spots. By observing the flow signal values characteristic for each molecule group the observation and measuring result is obtained.

In the embodiment presented in figure 2 the ionization zone 1 is in the middle of a mainly sheet-formed body, where the chambers 2 are placed on both sides of the ionization zone 1, side by side. To the ionization zone 1 several chambers 2 are connected radially or at least channels formed by one chamber. In this embodiment the walls of the chambers 2 are formed by the voltage plates and between the voltage plates a measuring plate 7 is placed. The measuring plate 7 is divided into parts and placed between the voltage plates in such a manner, that the distance between it and the voltage plates varies. Hereby, between the voltage plates, are formed at least two minor chambers, wherein the electric field intensity varies from each other. The gas to be examined is led out from the ionization zone 1 by changing the route of the gas on the different sides of the measuring plate 7 by taking advantage of the openings in the measuring plate 7. The parts of the measuring plate 7 are fixed to the one of the voltage plates. From the divided measuring plates 7 the current is measured against the ground with the help of the meters or intensifiers 3. From the ionization zone 1 leave several measuring channels (on the figure two channels) and the voltage plates are in different potentials in regard of the measuring plate 7. Hereby it is possible to start measuring signals right after the ionization, for instance in opposite electric fields against the ground. The foreign matter contents can be detected and measured by leading ionized gas into the channels of the device system, in which there are the chambers 2 with different electric fields 6, and by measuring the through the chambers 2 passing field current the measuring values are obtained.

One advantage of the structure presented in figure 2 is, that the measuring spots can be made for instance directly on an electronic circuit card and the voltage plates are on top of the insulations acting as protective sheets for the structure. With the help of this kind of a two-channel analyzer it is possible to measure concentrations of nerve gases, which are below even 0.1 mg/cu.m, when usually as an alarm limit for instance for sarine is considered 0.5 mg/cu.m. The false signals caused by tobacco smoke, combustion gases, explosion gases and protection smokes can be eliminated with this kind of multimeasuring.

However, the invention is not only related to the analyzing of nerve gases from the air, but it can be used for detection and analyzing of different molecules and molecule groups performed from gas in general, from gas attenuated with the help of a vacuum pump as well as from vapour of evaporized solid or liquid substances.

## Claims

1. A method for detection of foreign matter contents in gases, in which
- ionized gases and materials contained in it are led through a plurality of chambers (2) each with different electric fields (6) transverse to the gas stream,
- electric currents passing transversely through two or more of the plurality of said chambers (2) due to ions reaching measuring electrodes (7) are measured,
- corresponding signals are obtained, and on the basis of the amount and relationship of said signals corresponding to the measured electric currents, an analysis of the foreign matter in the gases is provided,
**said method being characterized in that**
- an ionization zone (1) is arranged at the intake end of the plurality of chambers (2),
- the gases and the materials contained in it are ionized in the ionization zone (1) and led through the plurality of said chambers (2) arranged sequentially, and
- the electric fields (6) of the plurality of chambers (2) are arranged in alternating field directions.

2. A method for detection of foreign matter contents in gases, in which
- ionized gases and materials contained in it are led through a plurality of chambers (2) each with different electric fields (6) transverse to the gas stream,
- electric currents passing transversely through two or more of the plurality of said chambers (2) due to ions reaching measuring electrodes (7) are measured,
- corresponding signals are obtained, and on the basis of the amount and relationship of said signals corresponding to the measured electric currents, an analysis of the foreign matter in the gases is provided,
**said method being characterized in that**
- the gases and the materials contained in it are ionized in an ionization zone (1), and
- the ionized gas containing foreign matter is passed along a tortuous path within each of said chambers (2), said tortuous path being defined by current measuring plates (7) carried by blocks alternately affixed to opposite chamber walls so that the chamber wall opposite to that to which each measuring plate (7) is affixed is free with a gap between adjacent measuring plates (7), thereby defining at least two electric field sub-chambers within said chambers (2), wherein the intensity of the electric field (6) in each of said sub-chambers is different from one another.

## Patentansprüche

1. Verfahren zum Nachweis von Fremdstoffgehalten in Gasen, in welchem
ionisierte Gase und darin enthaltene Stoffe durch eine Vielzahl Kammern (2) mit jeweils unterschiedlichem, quer zum Gasstrom ausgerichtetem elektrischen Feld (6) geleitet werden,
elektrische Ströme, die quer durch zwei oder mehrere der Vielzahl von Kammern (2) verlaufen, und von Meßelektroden (7) erreichenden Ionen hervorgerufen sind, gemessen werden,
entsprechende Signale erhalten werden, und auf der Basis der Größe und Beziehung der den gemessenen elektrischen Strömen entsprechenden Signale eine Analyse der Fremdstoffe in den Gasen zur Verfügung gestellt wird,
**wobei das Verfahren dadurch gekennzeichnet ist, daß**
eine Ionisierungszone (1) an dem Einlaßende der Vielzahl Kammern (2) angeordnet ist,
die Gase und die darin enthaltenen Stoffe in der Ionisierungszone (1) ionisiert, und durch die Vielzahl von Kammern (2), die aufeinanderfolgend angeordnet sind, geleitet werden, und
die elektrischen Felder der Vielzahl von Kammern (2) in abwechselnder Feldrichtung ausgerichtet sind.

2. Verfahren zum Nachweis von Fremdstoffgehalten in Gasen, in welchem
ionisierte Gase und darin enthaltene Stoffe durch eine Vielzahl Kammern (2) mit jeweils unterschiedlichem, quer zum Gasstrom ausgerichtetem elektrischen Feld (6) geleitet werden,
elektrische Ströme, die quer durch zwei oder mehrere der Vielzahl von Kammern (2) verlaufen, und von Meßelektroden (7) erreichenden Ionen hervorgerufen sind, gemessen werden,
entsprechende Signale erhalten werden, und auf der Basis der Größe und Beziehung der den gemessenen elektrischen Strömen entsprechenden Signale eine Analyse der Fremdstoffe in den Gasen zur Verfügung gestellt wird,
**wobei das Verfahren dadurch gekennzeichnet ist, daß**
die Gase und die darin enthaltenen Stoffe in der Ionisierungszone (1) ionisiert werden, und
das Fremdstoffe enthaltende, ionisierte Gas jede der Kammern (2) längs einem gewundenen Pfad passiert, dieser gewundene Pfad ist von Strommeßplatten (7) begrenzt, die wechselseitig an einander gegenüberliegenden Kammerwänden befestigten Blöcken gehalten sind, so daß die Kammerwand, die einer Kammerwand an der eine Strommeßplatte (7) befestigt ist gegenüberliegt, frei bleibt, mit einem Spalt zwischen benachbarten Meßplatten (7), wodurch mindestens zwei Teilkammern mit einem elektrischen Feld in jeder Kammer (2) begrenzt sind, wobei die Intensität des elektrischen Felds in jeder dieser Teilkammern voneinander verschieden ist.

## Revendications

1. Procédé de détection de substances étrangères contenues dans des gaz, dans lequel
- les gaz ionisés et les matériaux qu'ils contiennent sont dirigés dans une pluratité de chambres (2), chacune étant soumise à des champs électriques (6) différents, orientés transversalement par rapport au courant de gaz,
- on mesure les courants électriques, passant transversalement par deux ou plus de la pluralité de dites chambres (2), en raison des ions atteignant tes électrodes (7) de mesure,
- on obtient des signaux correspondants et, sur la base de la quantité et de la relation entre lesdits signaux correspondant aux courants électriques mesurés, on opère une analyse des substances étrangères contenues dans les gaz,
ledit procédé étant caractérisé par le fait
- qu'une zone d'ionisation (1) est agencée à l'extrémité d'entrée de la pluralité de chambres (2),
- que les gaz et les substances y étant contenues sont ionisées dans ta zone d'ionisation (1) et dirigés à travers la pluralité de dites chambres (2) disposées en succession, et
- les champs électriques (6) de la pluralité de chambres (2) sont disposés selon des directions de champ présentant une alternance.

2. Procédé de détection de substances étrangères contenues dans des gaz, dans lequel
- les gaz ionisés et les matériaux qu'ils contiennent sont dirigés dans une pluralité de chambres (2), chacune étant soumise à des champs électriques (6) différents, orientés transversalement par rapport au courant de gaz,
- on mesure les courants électriques, passant transversalement par deux ou plus de la pluralité de dites chambres (2), en raison des ions atteignant les électrodes (7) de mesure,
- on obtient des signaux correspondants et, sur la base de la quantité et de la relation entre lesdits signaux correspondant aux courants électriques mesurés, on opère une analyse des substances étrangères contenues dans les gaz,
ledit procédé étant caractérisé par le fait
- les gaz et les matériaux qu'ils contiennent sont ionisés dans une zone d'ionisation (1), et
- les gaz ionisés contenant des substances étrangères sont passés dans une trajectoire tortueuses, à l'intérieur de chacune desdites chambres (2), ladite trajectoire tortueuse étant définie par des plaques de mesure de courant (7) portées par des blocs fixés, de façon alternée, aux parois de chambre opposées, de façon que la paroi de chambre opposée à celle à laquelle chaque plaque de mesure (7) est fixée soit séparée avec un interstice entre les plaques de mesure (7) adjacentes, de manière à définir au moins deux sous-chambres à champ électrique à l'intérieur desdites chambres (2), l'intensité du champ électrique (6) dans chacune desdites sous-chambres étant différente d'une chambre à l'autre.
